(19) Europäisches Patentamt
European Patent Office
Office européen des brevets

(11) **EP 4 435 561 A1**

(12) **EUROPEAN PATENT APPLICATION**
published in accordance with Art. 153(4) EPC

(43) Date of publication:
**25.09.2024 Bulletin 2024/39**

(51) International Patent Classification (IPC):
*G06F 3/01* (2006.01)

(21) Application number: **22894174.6**

(86) International application number:
**PCT/CN2022/090812**

(22) Date of filing: **29.04.2022**

(87) International publication number:
**WO 2023/087629 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2021 CN 202111402198**

(71) Applicants:
• **Beijing Xiaomi Mobile Software Co., Ltd.**
**Beijing 100085 (CN)**

• **Beijing Xiaomi Pinecone Electronics Co., Ltd.**
**Beijing 100085 (CN)**

(72) Inventor: **ZHOU, Lingsong**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **DEVICE CONTROL METHOD AND APPARATUS, DEVICE, AND STORAGE MEDIUM**

(57)     Embodiments of the present application relate to a device control method and apparatus, a device, and a storage medium. The method comprises: receiving an ultrasonic signal sent by an intelligent terminal when acquiring an interaction request; determining a head action of a user according to a phase change of the ultrasonic signal; generating response information of the user to the interaction request according to the head action of the user; and sending the response information to the intelligent terminal, so that the intelligent terminal executes a function control operation corresponding to the response information.

Receiving an ultrasonic wave signal sent by an intelligent terminal when the intelligent terminal acquires an interaction request — S211

Determining a user's head action according to a phase change of the ultrasonic wave signal — S212

Generating a user's response message to the interaction request according to the user's head action — S213

Sending the response message to the intelligent terminal for the intelligent terminal to perform a function control operation corresponding to the response message — S214

Fig. 2a

## Description

## CROSS-REFERENCE TO RELATED APPLICATION

The present disclosure is based on and claims the priority of Chinese patent application No. 202111402198.2 filed on November 19, 2021, the entire content of which is incorporated herein by reference.

## FIELD

The present disclosure relates to the field of interactive control of intelligent terminals, and more particularly to a device control method, a device control apparatus, a device and a storage medium.

## BACKGROUND

In the scene of driving a vehicle, there are many situations where the user needs to interact with the mobile phone. For example, when the user is driving the vehicle, the mobile phone has a call, and the user needs to manually operate the mobile phone to determine whether to reject or answer the call; during navigation, when the navigation application installed in the mobile phone prompts that there is another smoother path and prompts the user whether it needs to be replaced, the user is also required to click by hand to give feedback. When the user is driving the vehicle, it is a dangerous driving behavior to leave his/her hand off the steering wheel. In the related art, the voice interaction is proposed to avoid the user's manual operation, but when the vehicle is driving, especially at a high speed, the tire noise, the engine noise and the wind noise will make the voice recognition very difficult.

## SUMMARY

The present disclosure provides a device control method, a device control apparatus, a device and a storage medium, which can improve the convenience for a user to control an intelligent terminal.

A first aspect of the present disclosure provides a device control method, which is applied to an intelligent head-mounted device, and includes: receiving an ultrasonic wave signal sent by an intelligent terminal when the intelligent terminal acquires an interaction request; according to a phase change of the ultrasonic wave signal, determining a user's head action; according to the user's head action, generating a user's response message to the interaction request; and sending the response message to the intelligent terminal for the intelligent terminal to perform a function control operation corresponding to the response message.

A second aspect of the present disclosure provides a device control method, which is applied to an intelligent terminal, and includes: acquiring an interaction request; according to the interaction request, sending out an ultrasonic wave signal; sending a sonic wave collection instruction to an intelligent head-mounted device for the intelligent head-mounted device to collect the ultrasonic wave signal according to the sonic wave collection instruction; and according to a response message returned by the intelligent head-mounted device, performing a corresponding function control operation.

A third aspect of the present disclosure provides a device control apparatus, including: a receiving module configured to receive an ultrasonic wave signal sent by an intelligent terminal when the intelligent terminal acquires an interaction request; a determining module configured to determine a user's head action according to a phase change of the ultrasonic wave signal; a generating module configured to generate a user's response message to the interaction request according to the user's head action; and a sending module configured to send the response message to the intelligent terminal for the intelligent terminal to perform a function control operation corresponding to the response message.

A fourth aspect of the present disclosure provides an intelligent head-mounted device, including a memory, a processor and a communication component. The memory is configured to store a computer program. The processor is configured to execute the computer program to realize the device control method in the above first aspect.

A fifth aspect of the present disclosure provides a computer-readable storage medium, on which a computer program is stored, which, when executed by a processor, realizes the device control method in the above first aspect.

A sixth aspect of the present disclosure provides a device control apparatus, including: an acquisition module configured to acquire an interaction request; a sending module configured to send out an ultrasonic wave signal according to the interaction request; a transmitting module configured to transmit a sonic wave collection instruction to an intelligent head-mounted device for the intelligent head-mounted device to collect the ultrasonic wave signal according to the sonic wave collection instruction; and a performing module configured to perform a corresponding function control operation according to a response message returned by the intelligent head-mounted device.

A seventh aspect of the present disclosure provides an intelligent terminal, including: a memory configured to store a computer program; and a processor configured to execute the computer program to realize the device control method in the above second aspect.

In some embodiments of the present disclosure, the intelligent head-mounted device receives the ultrasonic wave signal sent by the intelligent terminal when the intelligent terminal acquires the interaction request. Based on the phase change of the ultrasonic wave signal, the user's head action is determined, and then the user's response message to the interaction request is generated according to the user's head action. With the corresponding response message generated by detecting the ultrasonic wave signal, the ultrasonic wave signal has a good anti-interference performance, so that the intelligent terminal can perform the function control operation according to the response message, and the success rate of control is improved.

It is to be understood that both the foregoing general description and the following detailed description are illustrative and explanatory only and are not restrictive of the present disclosure.

## BRIEF DESCRIPTION OF THE DRAWINGS

The accompanying drawings, which are incorporated in and constitute a part of the specification, illustrate embodiments consistent with the present disclosure and together with the description, serve to explain the principles of the present disclosure, without unduly limiting the present disclosure.

Fig. 1 is a schematic diagram of a device control system according to an illustrative embodiment of the present disclosure.

Fig. 2a is a flow chart of a device control method from the perspective of an intelligent head-mounted device according to an illustrative embodiment of the present disclosure.

Fig. 2b is a flow chart of a device control method from the perspective of an intelligent terminal according to an illustrative embodiment of the present disclosure.

Fig. 3 is a flow chart of another device control method according to an illustrative embodiment of the present disclosure.

Fig. 4 is a flow chart of another device control method according to an illustrative embodiment of the present disclosure.

Fig. 5 is a schematic diagram of a device control apparatus according to an illustrative embodiment of the present disclosure.

Fig. 6 is a schematic diagram of another device control apparatus according to an illustrative embodiment of the present disclosure.

Fig. 7 is a schematic diagram of an intelligent head-mounted device according to an illustrative embodiment of the present disclosure.

Fig. 8 is a schematic diagram of an intelligent terminal according to an illustrative embodiment of the present disclosure.

## DETAILED DESCRIPTION

In order to make those ordinary skilled in the art better understand the technical solution of the present disclosure, and the technical solution in embodiments of the present disclosure will be described clearly and completely with reference to the accompanying drawings.

It should be noted that the terms "first" and "second" in the description and claims of the present disclosure and the above drawings are used to distinguish similar objects, and are not necessarily used to describe a specific order or sequence. It should be understood that the data defined by these terms can be interchanged under appropriate circumstances, so that the embodiments of the present disclosure described herein can be implemented in other orders than those illustrated or described herein. The examples described in the following illustrative embodiments do not represent all the embodiments consistent with the present disclosure. Rather, they are merely examples of devices and methods consistent with some aspects of the present disclosure as detailed in the appended claims.

At present, when a user needs to answer a phone, the user needs to manually operate a mobile phone to determine whether to reject or answer the mobile phone. During navigation, when the application program asks whether it is needed to switch to another smoother path, it is also necessary for the user to click by hand to give feedback. When driving a vehicle, it is a dangerous driving behavior to leave hands off a steering wheel.

In order to solve the above technical problems, in some embodiments of the present disclosure, an intelligent head-mounted device receives an ultrasonic wave signal sent by an intelligent terminal when the intelligent terminal acquires an interaction request; based on a phase change of the ultrasonic wave signal, the user's head action is determined, and then the user's response message to the interaction request is generated according to the user's head action. The corresponding response message is generated by detecting the ultrasonic wave signal, and the ultrasonic wave signal has a good anti-interference performance, so that the intelligent terminal can perform function control operations according to the response message and improve the success rate of control.

In the following, the technical solutions according to the embodiments of the present disclosure will be described in detail with reference to the accompanying drawings.

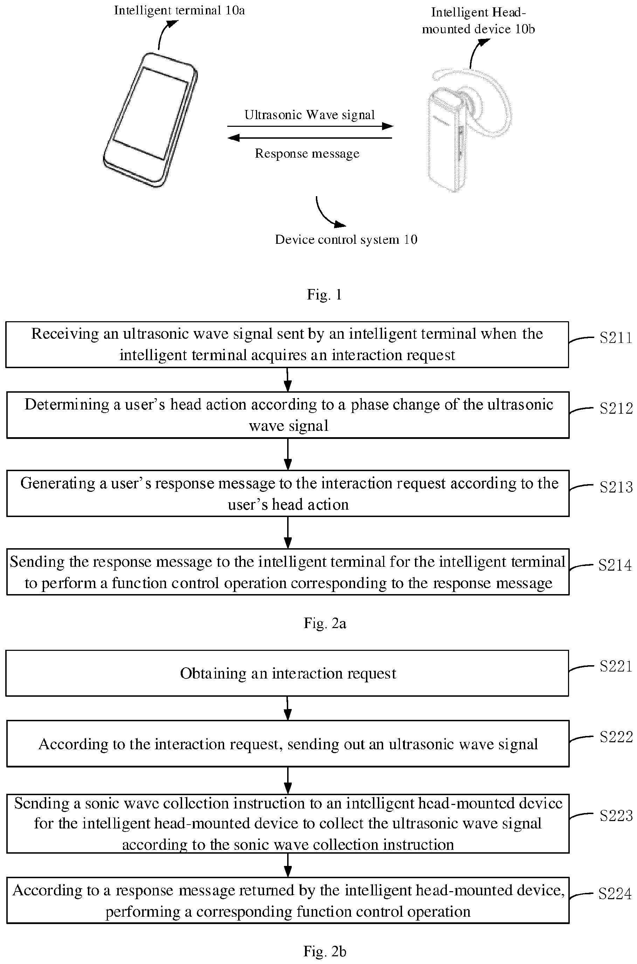

Fig. 1 is a schematic diagram of a device control system 10 according to an illustrative embodiment of the present disclosure. As shown in Fig. 1, the device control system 10 includes an intelligent terminal 10a and an intelligent head-mounted device 10b. A communication connection is established between the intelligent terminal 10a and the intelligent head-mounted device 10b. The intelligent terminal 10a and the intelligent head-mounted device 10b shown in Fig. 1 are only illustrative, and are not limited to their implementation forms.

The intelligent terminal 10a and the intelligent head-mounted device 10b can be connected by in a wired or wireless manner. In some embodiments, the intelligent terminal 10a can establish the communication connection with the intelligent head-mounted device 10b by using communication methods such as WIFI, Bluetooth, infrared communication, etc., or the intelligent terminal 10a can establish the communication connection with the intelligent head-mounted device 10b through a mobile network. The network type of the mobile network can be any one of 2G (GSM), 2.5G (GPRS), 3G (WCDMA, TD-SCDMA, CDMA2000, UTMS), 4G (LTE), 4G+ (LTE+), 5G, 5G-Advanced, WiMax, etc.

In some embodiments, the type of the intelligent terminal 10a is not limited, and the intelligent terminal 10a includes, but is not limited to, any one of a mobile phone, a personal computer, a tablet computer, a smart stereo, a smart TV, and the like.

In some embodiments, the type of the intelligent head-mounted device 10b is not limited, and the intelligent head-mounted device 10b includes, but is not limited to, any one of a headphone, a VR display device, AR glasses, and the like.

At present, the user can use the voice response interaction to control the mobile phone. However, during the high-speed driving of automobiles, the tire noise, the engine noise and the wind noise will make the voice recognition very difficult. The intelligent head-mounted device 10b can also be equipped with sensors such as a gyroscope and an accelerometer to recognize the head action of the user and control the intelligent terminal 10a.

In the present disclosure, the intelligent terminal 10a can send out the ultrasonic wave signal after acquiring the interaction request, and the intelligent head-mounted device 10b receives the ultrasonic wave signal. When the user's head has an action, the intelligent head-mounted device 10b can monitor the user's head action according to the phase change of the ultrasonic wave signal. According to the user's head action, the response message to the interaction request is generated and sent to the intelligent terminal 10a, so that the intelligent terminal 10a can perform the function control operation corresponding to the response message, and neither the intelligent terminal 10a nor the intelligent head-mounted device 10b needs to increase an additional hardware cost.

It should be noted that the intelligent terminal 10a does not need to add an additional hardware. For example, when ringing for the call, the intelligent terminal 10a sends out the ultrasonic wave signal through a speaker, thus saving the cost. The intelligent terminal 10a can usually send out the ultrasonic wave signal with a vibration frequency of 18 kHz-24 kHz. The type of the interaction request is not limited, including, but not limited to, any one of a call request and an application confirmation request.

In some embodiments, the user's head action includes, but is not limited to, any one of nodding back and forth, nodding left and right, shaking the head, rotating the head, looking up and looking down. The parameters of the user's head action include, but are not limited to, any of a frequency, an amplitude and a duration.

In some embodiments, the ultrasonic wave signal can be sent out synchronously with the audio after the interaction request or after the audio after the interaction request starts. The duration of the ultrasonic wave signal is not limited, and the duration of the ultrasonic wave signal may or may not be equal to the duration of the audio after the interaction request.

For example, an earphone worn on the user's head receives the ultrasonic wave signal sent by the mobile phone when the mobile phone rings for prompting the call, and the earphone monitors the number of nodding actions associated with the call function control of the mobile phone according to the ultrasonic wave signal. When the number of nodding actions is monitored to be one, the response message for answering the call is generated and sent to the mobile phone, for the mobile phone to perform the operation of answering the call. When the number of nodding actions is monitored to be three, the response message for rejecting the call is generated, for the mobile phone to perform the operation of rejecting the call.

In some embodiments, when the intelligent terminal 10a starts to emit the ultrasonic wave signal, the intelligent terminal 10a sends a sonic wave collection instruction to the intelligent head-mounted device 10b, and the intelligent head-mounted device 10b receives the sonic wave collection instruction and receives the ultrasonic wave signal according to the sonic wave collection instruction. For example, when the mobile phone has a call or the application program such as navigation requests confirmation, the mobile phone will play a ringtone or a request tone such as "Do you need to switch to a new route?" Usually, these sounds are below 16 kHz. While the mobile phone emits these sounds, it uses the sound frequency band of 16 kHz to 24 kHz to transmit the ultrasonic wave signal. The ultrasonic wave signal emitted by the mobile phone is a specific ultrasonic wave signal negotiated with the earphone. Preferably, the ultrasonic wave signal is a single frequency signal with a frequency of 22 kHz. When the intelligent terminal sends out ultrasonic waves, it sends out the sonic wave collection instruction, and the intelligent head-mounted device 10b receives the ultrasonic wave signal after receiving the sonic wave collection instruction, so that the intelligent head-mounted device does not need to be in a monitoring state in real time, thus reducing the power consumption of the device.

In some embodiments, for different devices of the same type, a difference between crystal oscillation clocks of the devices can be ignored. However, for different devices of different types, there will be a great difference between crystal oscillation clocks of the devices. For the intelligent terminal 10a and the intelligent head-mounted device 10b, the sound data played by the intelligent terminal 10a and the sound data collected by the intelligent head-mounted device 10b cannot be aligned. Therefore, it is necessary to adjust the data collected by the intelligent head-mounted device 10b according to the clock difference between the two devices, so as to ensure that the sound data played by the intelligent terminal 10a and the sound data collected by the intelligent head-mounted device 10b are aligned. For example, the intelligent terminal 10a plays the sound of Is, and the intelligent head-mounted device 10b may collect the sound data of 1.01s. For a sampling rate of 48 kHz, the sound data of 1s has 48,000 sampling points, and the sound data of 1.01s has 48,048 sampling points.

In some embodiments, after the crystal oscillation clocks of different types of devices are measured, the crystal oscillation clocks of different types of devices are stored in a server or other computer devices, and after the intelligent head-mounted device 10b receives the ultrasonic wave signal sent by the intelligent terminal when performing the function prompting action, the intelligent head-mounted device 10b requests the crystal oscillation clocks of the intelligent head-mounted device 10b and the intelligent terminal 10a from the server. The intelligent head-mounted device 10b calculates the difference data between the crystal oscillation clocks of the intelligent head-mounted device 10b and the intelligent terminal 10a according to their crystal oscillation clocks, and resamples the sound data sent by the intelligent terminal 10a according to the difference data between the crystal oscillation clocks. The resampling operation includes, but is not limited to, the following manners.

In a first resampling manner, the intelligent head-mounted device 10b resamples the ultrasonic wave signal according to the number of sampling points in a unit time corresponding to the crystal oscillation clock of the intelligent terminal 10a.

In a second resampling manner, the intelligent head-mounted device 10b resamples the sound data according to the number of sampling points in a unit time corresponding to the crystal oscillation clock of the intelligent terminal 10a.

In the above first resampling method, after receiving the sound data sent by the intelligent terminal 10a, the intelligent head-mounted device 10b filters out an audible sound signal in the sound data to obtain the ultrasonic wave signal; the intelligent head-mounted device 10b resamples the ultrasonic wave signal according to the number of sampling points in a unit time corresponding to the crystal oscillation clock of the intelligent terminal 10a. For example, after receiving the sound data, the earphone first performs high-pass filtering to filter out sounds such as ringtones or voice broadcasts below 16 kHz to obtain the ultrasonic wave signal for subsequent analysis. The earphone acquires the difference data between the crystal oscillation clocks of the intelligent terminals 10a and the intelligent head-mounted device 10b from the server, and resamples the ultrasonic wave signal according to that the sound data of 1s of the mobile phone has 48,000 sample points.

In the above second resampling manner, for example, the earphone acquires the difference data between the crystal oscillation clocks of the intelligent terminals 10a and the intelligent head-mounted device 10b from the server, and resamples the sound data according to that the sound data of 1s of the mobile phone has 48,000 sampling points.

In some embodiments, the intelligent head-mounted device 10b determines the user's head action according to the phase change of the ultrasonic wave signal. A possible way to achieve this is to determine a change value of an actual distance between the intelligent head-mounted device and the intelligent terminal according to the phase change of the ultrasonic wave signal in a set time period. According to the change value of the actual distance, the user's head action is determined.

In some embodiments, the intelligent head-mounted device 10b calculates a current actual distance value between the intelligent head-mounted device and the intelligent terminal according to a current phase of the ultrasonic wave signal. According to the current actual distance value, a moving state of the head is determined. When the head is in the moving state, the phase of the ultrasonic wave signal in the set time period is counted, and the phase change of the ultrasonic wave signal in the set time period is calculated according to the phase of the ultrasonic wave signal in the set time period.

In some embodiments, the intelligent head-mounted device 10b calculates a plurality of actual distance values between the intelligent head-mounted device worn on the user's head in the moving state and the intelligent terminal according to the current phase of the ultrasonic wave signal. In some embodiments, a change value of a current distance is determined according to the current phase of the ultrasonic wave signal, and according to the change value of the current distance, the current actual distance value is calculated by using the minimum control recursive average algorithm.

For example, the calculation formula of the change value of the current distance is as follows:

$$\Delta d = \frac{\Delta \theta * l}{2\pi}.$$

$\Delta d$ is a distance variation, $\Delta \theta$ is a phase variation, and 1 is a wavelength.

After the change value of the current distance is obtained, the current actual distance value is calculated by using the minimum control recursive average algorithm according to the change value of the current distance.

Similarly, according to the change value of the current distance, a steady-state distance is calculated by using the minimum control recursive average algorithm, and the steady-state distance value is the distance value between the intelligent head-mounted device and the intelligent terminal when the head is in a static state.

It should be noted that when the user's head is in the static state, the steady-state distance value is affected by many factors such as a temperature, and thus it is necessary to calculate the steady-state distance value in real time to update it. When the user's head is in the moving state, the intelligent head-mounted device 10b monitors the attribute information of the user's head action according to the ultrasonic wave signal, and does not update the steady-state distance value.

In some embodiments, the moving state of the head is determined according to the current actual distance value. When a difference between the current actual distance value and the steady-state distance value is great than or equal to a set distance difference, the head is in the moving state. When the difference between the current actual distance value and the steady-state distance value is less than the set distance difference, the head is in the static state. In the present disclosure, the set distance difference is not limited, and can be adjusted according to the actual situation.

When the user's head is in the static state, the steady-state distance value is updated, and the formula is as follows:

$$H_0(t): \hat{d}\ (t) = a \cdot \hat{d}\ (t-1) + (1-a) \cdot d\ (t).$$

When the user's head is in the moving state, the steady-state distance value is not updated, and the formula is as follows:

$$H_1(t): \hat{d}\ (t) = \hat{d}\ (t-1).$$

In some embodiments, the intelligent head-mounted device 10b generates the user's response message to the interaction request according to the user's head action. A way to achieve this is to determine the attribute information of the user's head action in the set time period, and generate the user's response message to the interaction request according to the attribute information of the user's head action. In some embodiments, according to the number of the user's head actions, a mapping relation table between the number of head actions and the response message is queried to obtain the response message of the user to the interaction request.

In some embodiments, attributes of the user's head actions in the set time period are determined. A possible way to achieve this is to calculate a plurality of actual distance values between the intelligent head-mounted device and the intelligent terminal according to the phase of the ultrasonic wave signal in the set time period, determine a peak value of the plurality of actual distance values, and count the number of the peak values, which is the number of the user's head actions. According to the phase of the ultrasonic wave signal in the set time period, the type of the head action can be determined. For example, according to the changing rule of the plurality of actual distance values, it is determined that the type of the head action is a nodding action, and then the number of nodding actions is counted.

For a first actual distance value, it is judged whether the first actual distance value is the maximum value in a local interval. If yes, it is judged whether the actual distance values on both sides of the first actual distance value include an actual distance value smaller than a set distance threshold. If the actual distance values on both sides of the first actual distance value include the actual distance value smaller than the set distance threshold, the first actual distance value is the peak value. In one head action, there will be one peak value of the actual distances. Therefore, the number of target head actions can be determined by counting the number of peak values.

It should be noted that the set distance threshold is not limited in the embodiments of the present disclosure, and can be adjusted according to the actual situation. In the vehicle driving scene, shaking the head will change the user's line of sight and affect the user's driving safety. Therefore, the target head action adopts nodding instead of shaking the head.

In some embodiments, the intelligent head-mounted device 10b determines the attribute information of the user's head action in the set time period. Another possible way to achieve is to input the plurality of actual distance values and channel impulse responding information of the ultrasonic wave signal into a trained head action monitoring model to obtain the attribute information of the user's head action. The head action monitoring model can be integrated into the intelligent head-mounted device 10b, and the intelligent head-mounted device 10b uses the head action monitoring model to monitor the parameters of the target head action to improve the data processing speed. For example, the intelligent head-mounted device 10b monitors the nodding action for three times, or monitors the nodding action for three times in four seconds according to the plurality of actual distance values.

In some embodiments, the intelligent head-mounted device 10b generates the user's response message to the interaction request according to the user's head action. A possible way to achieve this is that the intelligent head-mounted device 10b queries the mapping relation table between the number of target head actions and the response message according to the number of target head actions, and obtains the response message corresponding to the number of target head actions. It should be noted that the mapping relation between the number of target head actions and the response message is preset in advance. For example, in the call function, the response message of answering the call corresponds with nodding once and the response message of rejecting the call corresponds with nodding three times; and in the music playing function, the response message of playing music corresponds with nodding once, and the response message of pausing music corresponds with shaking the head once.

In some embodiments, after the intelligent head-mounted device 10b generates the user's response message to the interaction request, it sends the response message to the intelligent terminal 10a. The intelligent terminal 10a performs the corresponding function control operation after receiving the response message sent by the intelligent head-mounted device 10b. For example, after receiving the call answering message sent by the intelligent head-mounted device 10b, the intelligent terminal 10a answers the call and conducts the call by using the intelligent head-mounted device 10b wirelessly connected to it.

In addition to the above device control system 10, some embodiments of the present disclosure also provide a device control method, which may depend on, but is not limited to, the above device control system 10 provided the embodiments of the present disclosure.

From the perspective of the intelligent head-mounted device, Fig. 2a is a flow chart of a device control method according to an illustrative embodiment of the present disclosure. As shown in Fig. 2a, the method includes steps S211 to S214.

In step S211, an ultrasonic wave signal sent by an intelligent terminal when the intelligent terminal acquires an interaction request is received.

In step S212, a user's head action is determined according to a phase change of the ultrasonic wave signal.

In step S213, according to the user's head action, a user's response message to the interaction request is generated.

In step S214, the response message is sent to the intelligent terminal for the intelligent terminal to perform a function control operation corresponding to the response message.

From the perspective of the intelligent terminal, Fig. 2b is a flow chart of a device control method according to an illustrative embodiment of the present disclosure. As shown in Fig. 2b, the method includes steps S221 to S224.

In step S221, an interaction request is acquired.

In step S222, according to the interaction request, an ultrasonic wave signal is sent out.

In step S223, a sonic wave collection instruction is sent to the intelligent head-mounted device for the intelligent head-mounted device to collect the ultrasonic wave signal according to the sonic wave collection instruction.

In step S224, according to a response message returned by the intelligent head-mounted device, a corresponding function control operation is performed.

In some embodiments, the type of the intelligent terminal is not limited, and the intelligent terminal includes, but is not limited to, any one of a mobile phone, a personal computer, a tablet computer, a smart speaker and a smart TV.

In some embodiments, the type of the intelligent head-mounted device is not limited, and the intelligent head-mounted device includes, but is not limited to, any one of a headphone, a VR display device, AR glasses, etc.

At present, the user can use the voice response interaction to control the mobile phone. However, during the high-speed driving of the automobile, the tire noise, the engine noise and the wind noise will make the voice recognition very difficult. The intelligent head-mounted device can also be equipped with a sensor such as a gyroscope and an accelerometer to identify the user's head action and control the intelligent terminal.

According to the present disclosure, the intelligent terminal can send out the ultrasonic wave signal after acquiring the interaction request, and the intelligent head-mounted device receives the ultrasonic wave signal, so that when the user's head has an action, the intelligent head-mounted device can monitor the user's head action according to the phase change of the ultrasonic wave signal. According to the user's head action, the response message to the interaction request is generated and sent to the intelligent terminal, so that the intelligent terminal can perform the function control operation corresponding to the response message, and neither the intelligent terminal nor the intelligent head-mounted device needs to increase the additional hardware cost.

It should be noted that the intelligent terminal does not need to add the additional hardware. For example, when ringing for the call, the intelligent terminal sends out the ultrasonic wave signal through a speaker, thus saving the cost. The intelligent terminal can usually send out the ultrasonic wave signal with a vibration frequency of 18 kHz-24 kHz. The type of the interaction request is not limited, including, but not limited to, any one of a call request and an application confirmation request.

In some embodiments, the user's head action includes, but is not limited to, any of nodding back and forth, nodding left and right, shaking the head, rotating the head, looking up and looking down. The parameters of the user's head action include, but are not limited to, any of a frequency, an amplitude and a duration.

In some embodiments, the ultrasonic wave signal can be sent out synchronously with the audio after the interaction request or after the audio after the interaction request starts. The duration of the ultrasonic wave signal is not limited, and the duration of the ultrasonic wave signal may or may not be equal to the duration of the audio after the interaction request.

For example, an earphone worn on the user's head receives the ultrasonic wave signal sent by the mobile phone when the mobile phone rings for prompting the call, and the earphone monitors the number of nodding actions associated with the call function control of the mobile phone according to the ultrasonic wave signal. When the number of nodding actions is monitored to be one, the response message for answering the call is generated and sent to the mobile phone, for the mobile phone to perform the operation of answering the call. When the number of nodding actions is monitored to be three, the response message for rejecting the call is generated, for the mobile phone to perform the operation of rejecting the call.

In some embodiments, when the intelligent terminal starts to emit the ultrasonic wave signal, the intelligent terminal sends a sonic wave collection instruction to the intelligent head-mounted device, and the intelligent head-mounted device receives the sonic wave collection instruction and receives the ultrasonic wave signal according to the sonic wave collection instruction. For example, when the mobile phone has a call or an application program such as navigation requests confirmation, the mobile phone will play a ringtone or a request tone such as "Do you need to switch to a new route?" Usually, these sounds are below 16 kHz. When the mobile phone emits these sounds, it uses the sound frequency band of 16 kHz to 24 kHz to transmit the ultrasonic wave signal. The ultrasonic wave signal emitted by the mobile phone is a specific ultrasonic wave signal negotiated with the earphone. Preferably, the ultrasonic wave signal is a single frequency signal with a frequency of 22 kHz. When the intelligent terminal sends out the ultrasonic wave, it sends out the sonic wave collection instruction, and the intelligent head-mounted device receives the ultrasonic wave signal after receiving the sonic wave collection instruction, so that the intelligent head-mounted device does not need to be in a monitoring state in real time, which reduces the power consumption of the device.

In some embodiments, for different devices of the same type, a difference between crystal oscillation clocks of the devices can be ignored. However, for different devices of different types, there will be a great difference between crystal oscillation clocks of the devices. For the intelligent terminal and the intelligent head-mounted device, the sound data played by the intelligent terminal and the sound data collected by the intelligent head-mounted device cannot be aligned. Therefore, it is necessary to adjust the data collected by the intelligent head-mounted device according to the clock difference between the two devices, so as to ensure that the sound data played by the intelligent terminal and the sound data collected by the intelligent head-mounted device are aligned. For example, the intelligent terminal plays the sound of 1s, and the intelligent head-mounted device may collect the sound data of 1.01s. For a sampling rate of 48 kHz, the sound data of 1s has 48,000 sampling points, and the sound data of 1.01s has 48,048 sampling points.

In some embodiments, after the crystal oscillation clocks of different types of devices are measured, the crystal oscillation clocks of different types of devices are stored in a server or other computer devices, and after the intelligent head-mounted device receives the ultrasonic wave signal sent by the intelligent terminal when performing the function prompting action, the intelligent head-mounted device requests the crystal oscillation clocks of the intelligent head-mounted device and the intelligent terminal from the server. The intelligent head-mounted device calculates the difference data between the crystal oscillation clocks of the intelligent head-mounted device and the intelligent terminal according to their crystal oscillation clocks, and resamples the sound data sent by the intelligent terminal according to the difference data between the crystal oscillation clocks. The resampling operation includes, but is not limited to, the following manners.

In a first resampling manner, the intelligent head-mounted device resamples the ultrasonic wave signal according to the number of sampling points in a unit time corresponding to the crystal oscillation clock of the intelligent terminal.

In a second resampling manner, the intelligent head-mounted device resamples the sound data according to the number of sampling points in a unit time corresponding to the crystal oscillation clock of the intelligent terminal.

In the above first resampling method, after receiving the sound data sent by the intelligent terminal, the intelligent head-mounted device filters out an audible sound signal in the sound data to obtain the ultrasonic wave signal; the intelligent head-mounted device resamples the ultrasonic wave signal according to the number of sampling points in a unit time corresponding to the crystal oscillation clock of the intelligent terminal. For example, after receiving the sound data, the earphone first performs high-pass filtering to filter out sounds such as ringtones or voice broadcasts below 16 kHz to obtain the ultrasonic wave signal for subsequent analysis. The earphone acquires the difference data between the crystal oscillation clocks of the intelligent terminals and the intelligent head-mounted device from the server, and resamples the ultrasonic wave signal according to that the sound data of 1s of the mobile phone has 48,000 sample points.

In the above second resampling manner, for example, the earphone acquires the difference data between the crystal oscillation clocks of the intelligent terminals and the intelligent head-mounted device from the server, and resamples the sound data according to that the sound data of 1s of the mobile phone has 48,000 sampling points.

In some embodiments, the intelligent head-mounted device determines the user's head action according to the phase change of the ultrasonic wave signal. A possible way to achieve this is to determine a change value of an actual distance between the intelligent head-mounted device and the intelligent terminal according to the phase change of the ultrasonic wave signal in a set time period. According to the change value of the actual distance, the user's head action is determined.

In some embodiments, the intelligent head-mounted device calculates a current actual distance value between the intelligent head-mounted device and the intelligent terminal according to a current phase of the ultrasonic wave signal. According to the current actual distance value, a moving state of the head is determined. When the head is in the moving state, the phase of the ultrasonic wave signal in the set time period is counted, and the phase change of the ultrasonic wave signal in the set time period is calculated according to the phase of the ultrasonic wave signal in the set time period.

In some embodiments, the intelligent head-mounted device calculates a plurality of actual distance values between the intelligent head-mounted device worn on the user's head in the moving state and the intelligent terminal according to the current phase of the ultrasonic wave signal. In some embodiments, a possible way to achieve this is that a change value of a current distance is determined according to the current phase of the ultrasonic wave signal, and according to the change value of the current distance, the current actual distance value is calculated by using the minimum control recursive average algorithm.

For example, the calculation formula of the change value of the current distance is as follows:

$$\Delta d = \frac{\Delta \theta * l}{2\pi}.$$

$\Delta d$ is a distance variation, $\Delta \theta$ is a phase variation, and 1 is a wavelength.

After the change value of the current distance is obtained, the current actual distance value is calculated by using the minimum control recursive average algorithm according to the change value of the current distance.

Similarly, according to the change value of the current distance, a steady-state distance is calculated by using the minimum control recursive average algorithm, and the steady-state distance value is the distance value between the intelligent head-mounted device and the intelligent terminal when the head is in a static state.

It should be noted that the properties of the head action.

It should be noted that when the user's head is in the static state, the steady-state distance value is affected by many factors such as a temperature, and thus it is necessary to calculate the steady-state distance value in real time to update it. When the user's head is in the moving state, the intelligent head-mounted device monitors the attribute information of the user's head action according to the ultrasonic wave signal, and does not update the steady-state distance value.

In some embodiments, the moving state of the head is determined according to the current actual distance value. When a difference between the current actual distance value and the steady-state distance value is great than or equal to a set distance difference, the head is in the moving state. When the difference between the current actual distance value and the steady-state distance value is less than the set distance difference, the head is in the static state. In the present disclosure, the set distance difference is not limited, and can be adjusted according to the actual situation.

When the user's head is in the static state, the steady-state distance value is updated, and the formula is as follows:

$$H_0(t) : \hat{d}\ (t) = a \cdot \hat{d}\ (t-1) + (1-a) \cdot d\ (t).$$

When the user's head is in the moving state, the steady-state distance value is not updated, and the formula is as follows:

$$H_1(t) : \hat{d}\ (t) = \hat{d}\ (t-1).$$

In some embodiments, the intelligent head-mounted device generates the user's response message to the interaction request according to the user's head action. A way to achieve this is to determine the attribute information of the user's head action in the set time period, and generate the user's response message to the interaction request according to the attribute information of the user's head action. In some embodiments, according to the number of the user's head actions, a mapping relation table between the number of head actions and the response message is queried to obtain the response message of the user to the interaction request.

In some embodiments, attributes of the user's head actions in the set time period are determined. A possible way to achieve this is to calculate a plurality of actual distance values between the intelligent head-mounted device and the intelligent terminal according to the phase of the ultrasonic wave signal in the set time period, determine a peak value of the plurality of actual distance values, and count the number of the peak values, which is the number of the user's head actions. According to the phase of the ultrasonic wave signal in the set time period, the type of the head action can be determined. For example, according to the changing rule of the plurality of actual distance values, it is determined that the type of the head action is a nodding action, and then the number of nodding actions is counted.

For a first actual distance value, it is judged whether the first actual distance value is the maximum value in a local interval. If yes, it is judged whether the actual distance values on both sides of the first actual distance value include an actual distance value smaller than a set distance threshold. If the actual distance values on both sides of the first actual distance value include the actual distance value smaller than the set distance threshold, the first actual distance value is the peak value.

In one head action, there will be one peak value of the actual distances. Therefore, the number of target head actions can be determined by counting the number of peak values.

It should be noted that the set distance threshold is not limited in the embodiments of the present disclosure, and can be adjusted according to the actual situation. In the vehicle driving scene, shaking the head will change the user's line of sight and affect the user's driving safety. Therefore, the target head action adopts nodding instead of shaking the head.

In some embodiments, the intelligent head-mounted device determines the attribute information of the user's head action in the set time period. Another possible way to achieve is to input the plurality of actual distance values and channel impulse responding information of the ultrasonic wave signal into a trained head action monitoring model to obtain the attribute information of the user's head action. The head action monitoring model can be integrated into the intelligent head-mounted device, and the intelligent head-mounted device uses the head action monitoring model to monitor the parameters of the target head action to improve the data processing speed. For example, the intelligent head-mounted device monitors the nodding action for three times, or monitors the nodding action for three times in four seconds according to the plurality of actual distance values.

In some embodiments, the intelligent head-mounted device generates the user's response message to the interaction request according to the user's head action. A possible way to achieve this is that the intelligent head-mounted device queries the mapping relation table between the number of target head actions and the response message according to the number of target head actions, and obtains the response message corresponding to the number of target head actions. It should be noted that the mapping relation between the number of target head actions and the response message is preset in advance. For example, in the call function, the response message of answering the call corresponds with nodding once and the response message of rejecting the call corresponds with nodding three times; and in the music playing function, the response message of playing music corresponds with nodding once, and the response message of pausing music corresponds with shaking the head once.

In some embodiments, after the intelligent head-mounted device generates the user's response message to the interaction request, it sends the response message to the intelligent terminal. The intelligent terminal performs the corresponding function control operation after receiving the response message sent by the intelligent head-mounted device. For example, after receiving the call answering message sent by the intelligent head-mounted device, the intelligent terminal answers the call and conducts the call by using the intelligent head-mounted device wirelessly connected to it.

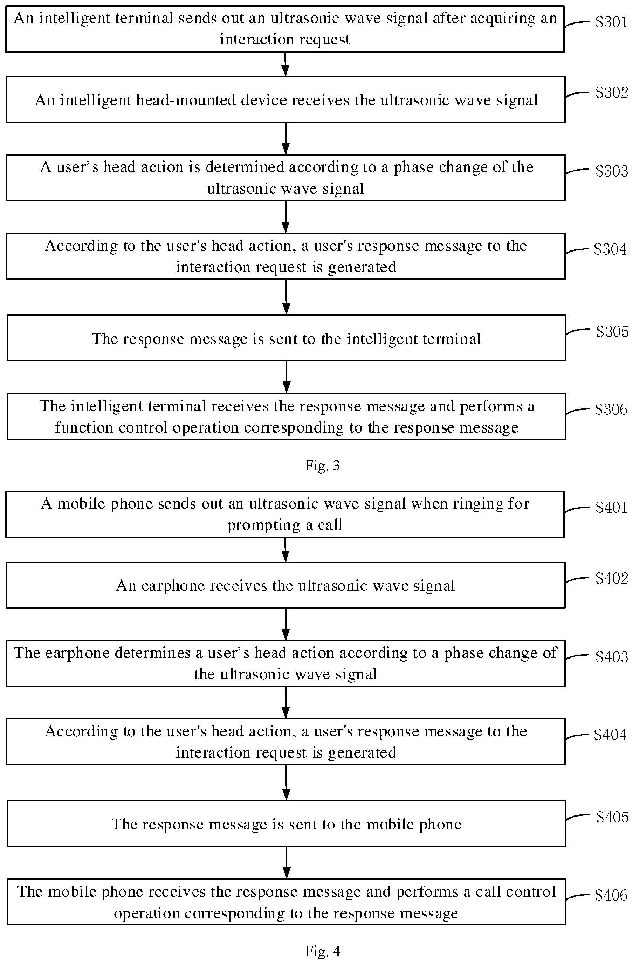

Fig. 3 is a flow chart of another device control method according to an illustrative embodiment of the present disclosure. As shown in Fig. 3, the method includes steps S301 to S306.

In step S301, an intelligent terminal sends out an ultrasonic wave signal after acquiring an interaction request.

In step S302, an intelligent head-mounted device receives the ultrasonic wave signal.

In step S303, a user's head action is determined according to a phase change of the ultrasonic wave signal.

In step S304, according to the user's head action, a user's response message to the interaction request is generated.

In step S305, the response message is sent to the intelligent terminal.

In step S306, the intelligent terminal receives the response message and performs a function control operation corresponding to the response message.

In this embodiment, the execution steps and beneficial effects of the above method can be referred to the descriptions of the above embodiments, and will not be repeated in this embodiment.

Fig. 4 is a flow chart of another device control method according to an illustrative embodiment of the present disclosure. As shown in Fig. 4, the method includes steps S401 to S406.

In step S401, a mobile phone sends out an ultrasonic wave signal when ringing for prompting a call.

In step S402, an earphone receives the ultrasonic wave signal.

In step S403, the earphone determines a user's head action according to a phase change of the ultrasonic wave signal.

In step S404, according to the user's head action, a user's response message to the interaction request is generated.

In step S405, the response message is sent to the mobile phone.

In step S406, the mobile phone receives the response message and performs a call control operation corresponding to the response message.

In this embodiment, the execution steps and beneficial effects of the above method can be referred to the descriptions of the above embodiments, and will not be repeated in this embodiment.

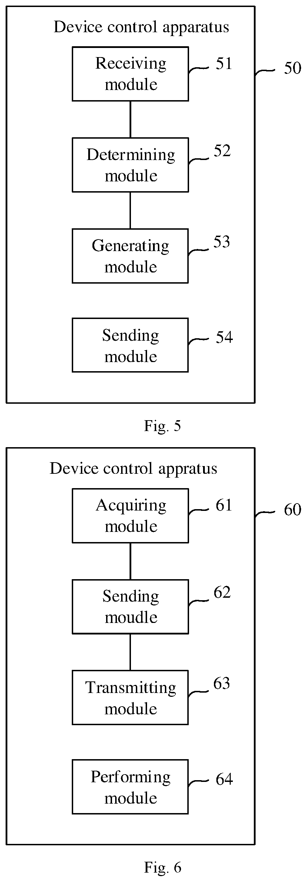

Fig. 5 is a schematic diagram of a device control apparatus 50 according to an illustrative embodiment of the present disclosure. As shown in Fig. 5, the device control apparatus 50 includes a receiving module 51, a determining module 52, a generating module 53 and a sending module 54.

The receiving module 51 is configured to receive an ultrasonic wave signal sent by an intelligent terminal when the intelligent terminal acquires an interaction request.

The determination module 52 is configured to determine a user's head action according to a phase change of the ultrasonic wave signal.

The generating module 53 is configured to generate a user's response message to the interaction request according to the user's head action.

The sending module 54 is configured to send the response message to the intelligent terminal for the intelligent terminal to perform a function control operation corresponding to the response message.

In some embodiments, before receiving the ultrasonic wave signal sent by the intelligent terminal when the intelligent terminal acquires the interaction request, the receiving module 51 is further configured to: receive a sonic wave collection instruction sent by the intelligent terminal when sending out the ultrasonic wave signal; and collect the ultrasonic wave signal according to the sonic wave collection instruction.

In some embodiments, after receiving the ultrasonic wave signal sent by the intelligent terminal when the intelligent terminal acquires the interaction request, the receiving module 51 is further configured to: acquire crystal oscillation clock difference data with the intelligent terminal; and resample sound data sent by the intelligent terminal according to the crystal oscillation clock difference data. The sound data includes the ultrasonic wave signal.

In some embodiments, when resampling the sound data sent by the intelligent terminal according to the crystal oscillation clock difference data, the receiving module 51 is configured to resample the ultrasonic wave signal according to the number of sampling points in a unit time corresponding to a crystal oscillation clock of the intelligent terminal.

In some embodiments, the sound data also includes an audible sound signal, and the receiving module 51 is further configured to filter out the audible sound signal before resampling the sound data sent by the intelligent terminal according to the crystal oscillation clock difference data.

In some embodiments, when determining the user's head action according to the phase change of the ultrasonic wave signal, the determining module 52 is configured to determine a change value of an actual distance between the intelligent head-mounted device and the intelligent terminal according to the phase change of the ultrasonic wave signal in a set time period; and determine the user's head action according to the change value of the actual distance.

In some embodiments, before determining the change value of the actual distance between the intelligent head-mounted device and the intelligent terminal according to the phase change of the ultrasonic wave signal in the set time period, the determining module 52 is further configured to: calculate a current actual distance value between the intelligent head-mounted device and the intelligent terminal according to a current phase of the ultrasonic wave signal; determine a moving state of a head according to the current actual distance value; counting the phase of the ultrasonic wave signal in the set time period, if the head is in the moving state; and calculate the phase change of the ultrasonic wave signal in the set time period according to the phase of the ultrasonic wave signal in the set time period.

In some embodiments, when calculating the current actual distance value between the intelligent head-mounted device and the intelligent terminal according to the current phase of the ultrasonic wave signal, the determining module 52 is configured to determine a change value of a current distance according to the current phase of the ultrasonic wave signal; and to calculate the current actual distance value by using the minimum control recursive average algorithm according to the change value of the current distance.

In some embodiments, when generating the user's response message to the interaction request according to the user's head action, the determining module 52 is configured to: determine attribute information of the user's head action in a set time period; and generate the user's response message to the interaction request according to the attribute information of the user's head action.

In some embodiments, the attribute information of the user's head action is the number of the user's head actions. When generating the user's response message to the interaction request according to the attribute information of the user's head action, the generating module 53 is configured to query a mapping relation table between the number of the head actions and the response message according to the number of the user's head actions, to obtain the user's response message to the interaction request.

In some embodiments, the attribute information of the user's head action is the number of the user's head actions, and when determining the attribute of the user's head action in the set time period, the determining module 52 is configured to: calculate a plurality of actual distance values between the intelligent head-mounted device and the intelligent terminal according to the phase of the ultrasonic wave signal in the set time period; determine a peak value of the plurality of actual distance values; and count the number of the peak values, which is the number of the user's head actions.

In some embodiments, when determining the peak value of the plurality of actual distance values, the determining module 52 is configured to, for a first actual distance value, determine whether the first actual distance value is a maximum value in a local interval; and judge whether the actual distance values on both sides of the first actual distance value include an actual distance value smaller than a set distance threshold, if yes. If the actual distance values on both sides of the first actual distance value include the actual distance value smaller than the set distance threshold, the first actual distance value is the peak value.

In some embodiments, when determining the attribute information of the user's head action in the set time period, the determining module 52 is configured to input the plurality of actual distance values and channel impulse responding information of the ultrasonic wave signal into a trained head action monitoring model to obtain the attribute information of the user's head action.

In some embodiments, when determining the moving state of the head according to the current actual distance value, the determining module 52 is configured for: if a difference between the current actual distance value and a steady-state distance value is greater than or equal to a set distance difference, the head is in the moving state, and the steady-state distance value is a distance value between the intelligent head-mounted device and the intelligent terminal when the head is in a static state; and if the difference between the current actual distance value and the steady-state distance value is less than the set distance difference, the head is in the static state, and the steady-state distance value is updated.

Fig. 6 is a schematic diagram of another device control apparatus 60 according to an illustrative embodiment of the present disclosure. As shown in Fig. 6, the device control device 60 includes an acquisition module 61, a sending module 62, a transmitting module 63 and a performing module 64.

The acquisition module 61 is configured to acquire an interaction request.

The sending module 62 is configured to send out an ultrasonic wave signal according to the interaction request.

The transmitting module 63 is configured to transmit a sonic wave collection instruction to an intelligent head-mounted device for the intelligent head-mounted device to collect the ultrasonic wave signal according to the sonic wave collection instruction.

The performing module 64 is configured to perform a corresponding function control operation according to a response message returned by the intelligent head-mounted device.

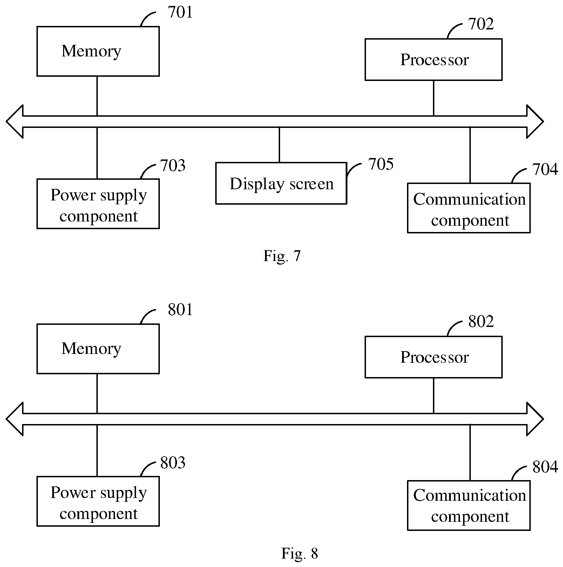

Fig. 7 is a schematic diagram of an intelligent head-mounted device according to an illustrative embodiment of the present disclosure. As shown in Fig. 7, the intelligent head-mounted device includes a memory 701 and a processor 702. In addition, the intelligent head-mounted device also includes necessary components such as a power supply component 703, a communication component 704 and a display screen 705.

The memory 701 is configured to store computer programs and can be configured to store various other data to support operations on the intelligent head-mounted device. Examples of such data include instructions for any application or method operating on the intelligent head-mounted device.

The memory 701 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 704 is configured for data transmission with other devices.

The processor 702 can execute the computer instructions stored in the memory 701 for receiving an ultrasonic wave signal sent by an intelligent terminal when the intelligent terminal acquires an interaction request; determining a user's head action, according to a phase change of the ultrasonic wave signal; generating a user's response message to the interaction request, according to the user's head action; and sending the response message to the intelligent terminal for the intelligent terminal to perform a function control operation corresponding to the response message.

In some embodiments, before receiving the ultrasonic wave signal sent by the intelligent terminal when the intelligent terminal acquires the interaction request, the processor 702 is further configured to: receive a sonic wave collection instruction sent by the intelligent terminal when sending out the ultrasonic wave signal; and collect the ultrasonic wave signal according to the sound wave collection instruction.

In some embodiments, after receiving the ultrasonic wave signal sent by the intelligent terminal when the intelligent terminal acquires the interaction request, the processor 702 may be further configured to: acquire a crystal oscillation clock difference data with the intelligent terminal; and according to the crystal oscillation clock difference data, resample sound data sent by the intelligent terminal, in which the sound data includes the ultrasonic wave signal.

In some embodiments, when resampling the sound data sent by the intelligent terminal according to the crystal oscillation clock difference data, the processor 702 is configured to resample the ultrasonic wave signal according to the number of sampling points in a unit time corresponding to a crystal oscillation clock of the intelligent terminal.

In some embodiments, the sound data also includes an audible sound signal, and before resampling the sound data sent by the intelligent terminal according to the crystal oscillation clock difference data, the processor 702 may be further configured to filter out the audible sound signal.

In some embodiments, when determining the user's head action according to the phase change of the ultrasonic wave signal, the processor 702 is configured to: according to the phase change of the ultrasonic wave signal in a set time period, determine a change value of an actual distance between the intelligent head-mounted device and the intelligent terminal; and according to the change value of the actual distance, determine the user's head action.

In some embodiments, before determining the change value of the actual distance between the intelligent head-mounted device and the intelligent terminal according to the phase change of the ultrasonic wave signal in the set time period, the processor 702 may be further configured to: calculate a current actual distance value between the intelligent head-mounted device and the intelligent terminal according to a current phase of the ultrasonic wave signal; determine a moving state of the head according to the current actual distance value; if the head is in the moving state, count a phase of the ultrasonic wave signal in the set time period; and calculate the phase change of the ultrasonic wave signal in the set time period according to the phase of the ultrasonic wave signal in the set time period.

In some embodiments, when calculating the current actual distance value between the intelligent head-mounted device and the intelligent terminal according to the current phase of the ultrasonic wave signal, the processor 702 is configured to: according to the current phase of the ultrasonic wave signal, determine a change value of a current distance; and according to the change value of the current distance, calculate the current actual distance value by using a minimum control recursive average algorithm.

In some embodiments, when generating the user's response message to the interaction request according the user's head action, the processor 702 is configured to: determine attribute information of the user's head action in a set time period; and generate the user's response message to the interaction request according to the attribute information of the user's head action.

In some embodiments, the attribute information of the user's head action is the number of the user's head action, and when generating the user's response message to the interaction request according the user's head action, the processor 702 is configured to query a mapping relation table between the number of the head actions and the response message to obtain the user's response message to the interaction request, according to the number of the user's head actions.

In some embodiments, the attribute information of the user's head action is the number of the user's head action, and when determining the attribute of the user's head action in the set time period, the processor 702 is configured to: calculate a plurality of actual distance values between the intelligent head-mounted device and the intelligent terminal according to the phase of the ultrasonic wave signal in the set time period; determine a peak value of the plurality of actual distance values; and count the number of the peak values, which is the number of the user's head actions.

In some embodiments, when determining the peak value of the plurality of actual distance values, the processor 702 is configured to: for a first actual distance value, judge whether the first actual distance value is a maximum value in a local interval; and if yes, judge whether the actual distance values on both sides of the first actual distance value include an actual distance value smaller than a set distance threshold. If the actual distance values on both sides of the first actual distance value include the actual distance value smaller than the set distance threshold, the first actual distance value is the peak value.

In some embodiments, when determining the attribute information of the user's head action in the set time period, the processor 702 is configured to input the plurality of actual distance values and channel impulse responding information of the ultrasonic wave signal into a trained head action monitoring model to obtain the attribute information of the user's head action.

In some embodiments, when determining the moving state of the head according to the current actual distance value, the processor 702 is configured for: if a difference between the current actual distance value and a steady-state distance value is greater than or equal to a set distance difference, the head is in the moving state, and the steady-state distance value is a distance value between the intelligent head-mounted device and the intelligent terminal when the head is in a static state; and if the difference between the current actual distance value and the steady-state distance value is less than the set distance difference value, the head is in the static state and the steady-state distance value is updated.

Fig. 8 is a schematic diagram of an intelligent terminal according to an illustrative embodiment of the present disclosure. As shown in Fig. 8, the intelligent terminal includes a memory 801 and a processor 802. In addition, the intelligent terminal also includes necessary components such as a power supply component 803, a communication component 804 and a display screen 805.

The memory 801 is used for storing computer programs and can be configured to store various other data to support the operation on the intelligent terminal. Examples of these data include instructions for any application or method operating on the intelligent terminal.

The memory 801 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The communication component 804 is used for data transmission with other devices.

The processor 802 can execute the computer instructions stored in the memory 801 for: acquiring an interaction request; according to the interaction request, sending out an ultrasonic wave signal; sending a sonic wave collection instruction to an intelligent head-mounted device for the intelligent head-mounted device to collect the ultrasonic wave signal according to the sonic wave collection instruction; according to a response message returned by the intelligent head-mounted device, preforming a corresponding function control operation.

Correspondingly, the embodiments of the present disclosure also provide a computer-readable storage medium storing a computer program. When the computer-readable storage medium stores the computer program, and the computer program is executed by one or more processors, the one or more processors are caused to perform the steps in the method embodiments of Figs. 2a and 2b.

Correspondingly, the embodiments of the present disclosure also provide a computer program product, which includes computer programs/instructions, and the computer programs/instructions are executed by a processor to perform the steps in the method embodiments of Figs. 2a and 2b.

The communication components in Figs. 7 and 8 are configured to facilitate wired or wireless communication between the devices where the communication components are located and other devices. The device where the communication component is located can access wireless networks based on communication standards, such as WiFi, mobile communication networks such as 2G, 3G, 4G/LTE, 5G, or their combination. In an illustrative embodiment, the communication component receives a broadcast signal or broadcast related information from an external broadcast management system via a broadcast channel. In an illustrative embodiment, the communication component further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

The above power supply components in Figs. 7 and 8 provide power for various components of the devices where the power supply components are located. The power supply components can include a power management system, one or more power supplies, and other components associated with generating, managing and distributing power for the devices where the power supply components are located.

The display screen in Fig. 8 includes a screen, which may include a liquid crystal display (LCD) and a touch panel (TP). If the screen includes the touch panel, the screen may be implemented as a touch screen to receive an input signal from a user. The touch panel includes one or more touch sensors to sense touch, sliding and gestures on the touch panel. The touch sensor can not only sense the boundary of the touch or sliding action, but also detect the duration and pressure related to the touch or sliding operation.

In some embodiments, the intelligent terminal according to the present disclosure may further include an audio component.

The audio component can be configured to output and/or input an audio signal. For example, the audio component includes a microphone (MIC), which is configured to receive external audio signals when the device where the audio component is located is in operation modes, such as a call mode, a recording mode and a voice recognition mode. The received audio signal may be further stored in the memory or transmitted via the communication component. In some embodiments, the audio component further includes a speaker for outputting the audio signal.

It should be understood by those skilled in the art that embodiments of the present disclosure may be provided as a method, a system, or a computer program product. Therefore, the present disclosure can take the form of an entirely hardware embodiment, an entirely software embodiment, or an embodiment combining software and hardware aspects. Furthermore, the present disclosure may take the form of a computer program product embodied on one or more computer usable storage media (including but not limited to a disk storage, a CD-ROM, an optical storage, etc.) in which computer usable program codes are contained.

The present disclosure is described with reference to flow charts and/or block diagrams of methods, devices (systems), and computer program products according to embodiments of the present disclosure. It should be understood that each flow and/or block in the flow chart and/or block diagram, and combinations of the flow and/or block in the flow chart and/or block diagram can be implemented by computer program instructions. These computer program instructions may be provided to a processor of a general-purpose computer, a special-purpose computer, an embedded processor or other programmable data processing apparatuses to produce a machine, such that the instructions which are executed by the processor of the computer or other programmable data processing apparatuses produce an apparatus for implementing the functions specified in one or more flows of the flow chart and/or one or more blocks of the block diagram.

These computer program instructions may also be stored in a computer-readable memory that can direct a computer or other programmable data processing apparatuses to function in a particular manner, such that the instructions stored in the computer-readable memory produce a manufacture article including an instruction apparatus that implement the functions specified in one or more flows of the flow chart and/or one or more blocks of the block diagram.

These computer program instructions may also be loaded onto a computer or other programmable data processing devices, so that a series of operation steps are performed on the computer or other programmable devices to produce a computer-implemented process, and thus the instructions executed on the computer or other programmable devices provide steps for implementing the functions specified in one or more flow of the flow chart and/or one or more blocks of the block diagram.

In a typical configuration, a computing device includes one or more processors (CPU), an input/output interface, a network interface, and a memory.

The memory may include a non-permanent memory, a random access memory (RAM) and/or a nonvolatile memory in a computer-readable medium, such as a read-only memory (ROM) or a flash memory. The memory is an example of the computer-readable medium.

The computer-readable medium includes permanent and non-permanent, removable and non-removable media, which can store information by any method or technology. Information can be computer-readable instructions, data structures, modules of programs or other data. Examples of storage media for computers include, but not limited to, a phase change memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, CD-ROM, a digital versatile disc (DVD), or other optical storages, magnetic tapes of magnetic cassettes, magnetic tape and magnetic disk storages or other magnetic storage devices or any other non-transmission media, which can be used to store information that can be accessed by computing devices. According to the definition in the present disclosure, the computer-readable medium does not include transitory computer-readable media, such as modulated data signals and carrier waves.

It should be noted that in the present disclosure, relational terms such as "first" and "second" are only used to distinguish one entity or operation from another entity or operation, and do not necessarily require or imply that there is any such actual relationship or order between these entities or operations. Moreover, the terms "include", "comprise" or any other variation thereof are intended to cover non-exclusive inclusion, so that a process, a method, an article or equipment including a series of elements include not only those elements, but also other elements not explicitly listed or elements inherent to such process, method, article or equipment. Without more restrictions, the element defined by the phrase "including a/an" does not exclude that there are other identical elements in the process, method, article or equipment including the element.

The above is only the specific implementation of the present disclosure, so that those skilled in the art can understand or realize the present disclosure. Many modifications to these embodiments will be obvious to those skilled in the art, and the general principles defined herein can be implemented in other embodiments without departing from the spirit or scope of the present disclosure. Therefore, the present disclosure will not be limited to these embodiments herein, but conform to the widest scope consistent with the principles and novel characteristics disclosed herein.

**Claims**

1. A device control method, applied to an intelligent head-mounted device, and comprising:

    receiving an ultrasonic wave signal sent by an intelligent terminal when the intelligent terminal acquires an interaction request;
    determining a user's head action according to a phase change of the ultrasonic wave signal;
    generating a user's response message to the interaction request according to the user's head action; and
    sending the response message to the intelligent terminal for the intelligent terminal to perform a function control operation corresponding to the response message.

2. The method according to claim 1, wherein before receiving the ultrasonic wave signal sent by the intelligent terminal when the intelligent terminal acquires the interaction request, the method further comprises:

    receiving a sonic wave collection instruction sent by the intelligent terminal when sending out the ultrasonic wave signal; and
    collecting the ultrasonic wave signal according to the sonic wave collection instruction.

3. The method according to claim 1, wherein after receiving the ultrasonic wave signal sent by the intelligent terminal when the intelligent terminal acquires the interaction request, the method further comprises:

    acquiring a crystal oscillation clock difference data with the intelligent terminal; and
    according to the crystal oscillation clock difference data, resampling sound data sent by the intelligent terminal, wherein the sound data comprises the ultrasonic wave signal.

4. The method according to claim 3, wherein the resampling the sound data sent by the intelligent terminal according to the crystal oscillation clock difference data comprises:
resampling the ultrasonic wave signal according to the number of sampling points in a unit time corresponding to a crystal oscillation clock of the intelligent terminal.

5. The method according to claim 3, wherein the sound data further comprises an audible sound signal, and before resampling the sound data sent by the intelligent terminal according to the crystal oscillation clock difference data, the method further comprises:
filtering out the audible sound signal.

6. The method according to claim 1, wherein the determining the user's head action according to the phase change of the ultrasonic wave signal comprises:

according to the phase change of the ultrasonic wave signal in a set time period, determining a change value of an actual distance between the intelligent head-mounted device and the intelligent terminal; and
according to the change value of the actual distance, determining the user's head action.

7. The method according to claim 6, wherein before determining the change value of the actual distance between the intelligent head-mounted device and the intelligent terminal according to the phase change of the ultrasonic wave signal in the set time period, the method further comprises:

calculating a current actual distance value between the intelligent head-mounted device and the intelligent terminal according to a current phase of the ultrasonic wave signal;
determining a moving state of a head according to the current actual distance value;
if the head is in the moving state, counting a phase of the ultrasonic wave signal in the set time period; and
according to the phase of the ultrasonic wave signal in the set time period, calculating the phase change of the ultrasonic wave signal in the set time period.

8. The method according to claim 7, wherein the determining the change value of the actual distance between the intelligent head-mounted device and the intelligent terminal according to the phase change of the ultrasonic wave signal in the set time period comprises:

determining a current distance change value according to the current phase of the ultrasonic wave signal; and
according to the current distance change value, calculating the current actual distance value by using a minimum control recursive average algorithm.

9. The method according to claim 1, wherein the generating the user's response message to the interaction request according to the user's head action comprises:

determining attribute information of the user's head action in a set time period; and
according to the attribute information of the user's head action, generating the user's response message to the interaction request.

10. The method according to claim 9, wherein the attribute information of the user's head action is the number of the user's head action, and the generating the user's response message to the interaction request according to the attribute information of the user's head action comprises:
according to the number of the user's head action, querying a mapping relation table between the number of the user's head action and the response message to obtain the user's response message to the interaction request.

11. The method according to claim 9, wherein the attribute information of the user's head action is the number of the user's head action, and the determining the attribute of the user's head action in the set time period comprises:

calculating a plurality of actual distance values between the intelligent head-mounted device and the intelligent terminal according to a phase of the ultrasonic wave signal in the set time period;
determining a peak value of the plurality of actual distance values; and
counting the number of the peak value, wherein the number of the peak value is the number of the user's head action.

12. The method according to claim 11, wherein the determining the peak value of the plurality of actual distance values comprises:

for a first actual distance, judging whether the first actual distance value is a maximum value in a local interval; and
if yes, judging whether actual distance values on both sides of the first actual distance value comprise an actual distance value smaller than a set distance threshold, wherein if the actual distance values on both sides of the first actual distance value comprise the actual distance value smaller than the set distance threshold, the first actual distance value is the peak value.

13. The method according to claim 11, wherein the determining the attribute information of the user's head action in the set time period comprises:
inputting the plurality of actual distance values and channel impulse responding information of the ultrasonic wave signal into a trained head action monitoring model to obtain the attribute information of the user's head action.

14. The method according to claim 7, wherein the determining the moving state of the head according to the current actual distance value comprises:

if a difference between the current actual distance value and a steady-state distance value is greater than or equal to a set distance difference, the head is in the moving state, and the steady-state distance value is a distance value between the intelligent head-mounted device and the intelligent terminal when the head is in a static state; and

if the difference between the current actual distance value and the steady-state distance value is less than the set distance difference, the head is in the static state and the steady-state distance value is updated.

15. A device control method, applied to an intelligent terminal, and comprising:

obtaining an interaction request;

according to the interaction request, sending out an ultrasonic wave signal;

sending a sonic wave collection instruction to an intelligent head-mounted device for the intelligent head-mounted device to collect the ultrasonic wave signal according to the sonic wave collection instruction; and

according to a response message returned by the intelligent head-mounted device, performing a corresponding function control operation.

16. A device control apparatus, comprising:

a receiving module configured to receive an ultrasonic wave signal sent by an intelligent terminal when the intelligent terminal acquires an interaction request;

a determining module configured to determine a user's head action according to a phase change of the ultrasonic wave signal;

a generating module configured to generate a user's response message to the interaction request according to the user's head action; and

a sending module configured to send the response message to the intelligent terminal for the intelligent terminal to perform a function control operation corresponding to the response message.

17. An intelligent head-mounted device, comprising: a memory, a processor and a communication component,

wherein the memory is configured to store a computer program; and

the processor is configured to execute the computer program to realize steps in a method according to any one of claims 1 to 14.

18. A computer-readable storage medium, having a computer program stored thereon, wherein the computer program, when executed by a processor, implements the steps in a method according to any one of claims 1 to 14.

19. A device control apparatus, comprising:

an acquisition module configured to acquire an interaction request;

a sending module configured to send out an ultrasonic wave signal according to the interaction request;

a transmitting module configured to transmit a sonic wave collection instruction to an intelligent head-mounted device for the intelligent head-mounted device to collect the ultrasonic wave signal according to the sonic wave collection instruction; and

a performing module configured to perform a corresponding function control operation according to a response message returned by the intelligent head-mounted device.

20. An intelligent terminal, comprising:

a memory configured to store a computer program;

a processor configured to execute the computer program to realize steps in a method according to claim 15.

Intelligent terminal 10a

Intelligent Head-
mounted device 10b

Ultrasonic Wave signal

Response message

Device control system 10

Fig. 1

| Receiving an ultrasonic wave signal sent by an intelligent terminal when the intelligent terminal acquires an interaction request | S211 |

| Determining a user's head action according to a phase change of the ultrasonic wave signal | S212 |

| Generating a user's response message to the interaction request according to the user's head action | S213 |

| Sending the response message to the intelligent terminal for the intelligent terminal to perform a function control operation corresponding to the response message | S214 |

Fig. 2a

| Obtaining an interaction request | S221 |

| According to the interaction request, sending out an ultrasonic wave signal | S222 |

| Sending a sonic wave collection instruction to an intelligent head-mounted device for the intelligent head-mounted device to collect the ultrasonic wave signal according to the sonic wave collection instruction | S223 |

| According to a response message returned by the intelligent head-mounted device, performing a corresponding function control operation | S224 |

Fig. 2b

| An intelligent terminal sends out an ultrasonic wave signal after acquiring an interaction request | S301 |

| An intelligent head-mounted device receives the ultrasonic wave signal | S302 |

| A user's head action is determined according to a phase change of the ultrasonic wave signal | S303 |

| According to the user's head action, a user's response message to the interaction request is generated | S304 |

| The response message is sent to the intelligent terminal | S305 |

| The intelligent terminal receives the response message and performs a function control operation corresponding to the response message | S306 |

Fig. 3

| A mobile phone sends out an ultrasonic wave signal when ringing for prompting a call | S401 |

| An earphone receives the ultrasonic wave signal | S402 |

| The earphone determines a user's head action according to a phase change of the ultrasonic wave signal | S403 |

| According to the user's head action, a user's response message to the interaction request is generated | S404 |

| The response message is sent to the mobile phone | S405 |

| The mobile phone receives the response message and performs a call control operation corresponding to the response message | S406 |

Fig. 4

Device control apparatus

Receiving module — 51

Determining module — 52

Generating module — 53

Sending module — 54

— 50

Fig. 5

Device control appratus

Acquiring module — 61

Sending moudle — 62

Transmitting module — 63

Performing module — 64

— 60

Fig. 6

701

Memory

702

Processor

703

Power supply
component

705

Display screen

704

Communication
component

Fig. 7

801

Memory

802

Processor

803

Power supply
component

804

Communication
component

Fig. 8

## INTERNATIONAL SEARCH REPORT

International application No.

**PCT/CN2022/090812**

| A. | CLASSIFICATION OF SUBJECT MATTER |
|---|---|

G06F 3/01(2006.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, CNTXT, CNKI, DWPI, USTXT, ENTXT, WOTXT: 头戴设备, 耳机, 头, 动作, 超声波, 距离, 控制, 交互, headset, earphone, head, action, motion, ultrasonic, distance, control, interaction

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114153311 A (BEIJING MILLET MOBILE SOFTWARE LTD. CO. et al.) 08 March 2022 (2022-03-08)<br>description, paragraphs 1-212, and figures 1-8 | 1-20 |
| X | CN 113163293 A (SUZHOU TOUCHAIR TECHNOLOGY CO., LTD.) 23 July 2021 (2021-07-23)<br>description, paragraphs 35-52, and figure 1 | 1-20 |
| X | CN 113342406 A (GOERTEK TECHNOLOGY CO., LTD.) 03 September 2021 (2021-09-03)<br>description, paragraphs 55-120 | 1-20 |
| A | CN 103226386 A (GUANGDONG OPPO MOBILE TELECOMMUNICATIONS CORP., LTD.) 31 July 2013 (2013-07-31)<br>entire document | 1-20 |
| A | US 2014006825 A1 (SHENHAV, David) 02 January 2014 (2014-01-02)<br>entire document | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 July 2022** | **27 July 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090812**

| Patent document cited in search report | | | Publication date (day/month/year) | Patent family member(s) | Publication date (day/month/year) |
|---|---|---|---|---|---|
| CN | 114153311 | A | 08 March 2022 | None | |
| CN | 113163293 | A | 23 July 2021 | None | |
| CN | 113342406 | A | 03 September 2021 | None | |
| CN | 103226386 | A | 31 July 2013 | None | |
| US | 2014006825 | A1 | 02 January 2014 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111402198